**Europäisches Patentamt**

**European Patent Office**

**Office européen des brevets**

(11) Veröffentlichungsnummer: **0 446 422 A1**

(12) **EUROPÄISCHE PATENTANMELDUNG**

(21) Anmeldenummer: **90121073.2**

(22) Anmeldetag: **03.11.90**

(51) Int. Cl.⁵: **B01D 46/24, F01N 3/02**

Geänderte Patentansprüche gemäss Regel 86 (2) EPÜ.

(30) Priorität: **10.03.90 DE 4007724**

(43) Veröffentlichungstag der Anmeldung: **18.09.91 Patentblatt 91/38**

(84) Benannte Vertragsstaaten: **AT BE CH DE DK ES FR GB GR IT LI LU NL SE**

(71) Anmelder: **ERNST-APPARATEBAU GmbH & Co.**
**Wandhofener Strasse 2**
**W-5800 Hagen 1(DE)**

(72) Erfinder: **Krumme, Karl-Heinz, Dipl.-Ing.**
**Unionstrasse 5**
**W-4760 Werl(DE)**

(74) Vertreter: **Cohausz & Florack Patentanwälte**
**Postfach 14 01 61 Schumannstrasse 97**
**W-4000 Düsseldorf 1(DE)**

(54) **Russfilter für Dieselmotoren.**

(57) Die Erfindung betrifft einen Rußfilter für Dieselmotoren mit einem Einlaß zum Einleiten von Abgasen, einem Auslaß und einer zwischen Einlaß und Auslaß gelegenen Filterzone, die eine Vielzahl von rohrförmigen poröskeramischen Filterkerzen oder Filterzylindern aufweist, durch deren zylindrische Wandungen das Abgas radial eintritt und durch deren axialen Innenraum das Abgas axial wieder austritt, wobei die Filterkerzen oder Filterzylinder an ihren Enden mittels einer Hülse aus Metallgestrick, -gewirk, -geflecht oder -gewebe radial und mittels einer Scheibe axial elastisch gelagert und abgedichtet sind.

Fig. 2

Die Erfindung betrifft einen Rußfilter für Dieselmotoren mit einem Einlaß zum Einleiten von Abgasen, einem Auslaß und einer zwischen Einlaß und Auslaß gelegenen Filterzone, die eine Vielzahl von rohrförmigen poröskeramischen Filterkerzen oder Filterzylindern aufweist, durch deren zylindrische Wandungen das Abgas radial eintritt und durch deren axialen Innenraum das Abgas axial wieder austritt.

Rußfilter der vorstehend genannten Art sind allgemein bekannt und werden eingesetzt, um Rußpartikel aus Abgasen von Dieselmotoren herauszufiltern. Bei derartigen Filtern werden die Rußpartikel in der Filterzone zurückgehalten. Nach einer bestimmten Betriebsdauer ist es dann erforderlich, die Filterzone wieder zu reinigen. Dies geschieht üblicherweise durch Abbrennen der angesammelten Rußpartikel.

Aufgabe der Erfindung ist es, endseitige Lagerungen für Filterkerzen und Filterzylinder zu schaffen, die neben der Lagerfunktion eine sichere Abdichtung bilden, Temperaturspannungen abfangen und Schwingungen aufnehmen, um Risse und Zerstörungen der Filter zu verhindern und ein hohes Nachstellvermögen aufzuweisen.

Diese Aufgabe wird erfindungsgemäß dadurch gelöst, daß die Filterkerzen oder Filterzylinder an ihren Enden mittels einer Hülse aus Metallgestrick, -gewirk, -geflecht oder -gewebe radial und mittels einer Scheibe axial elastisch gelagert und abgedichtet sind.

Die Erfindung hat den Vorteil, daß die keramischen Filterkerzen bzw. Filterzylinder dem rauhen Betrieb, wie er z.B. an Bord eines Kraftfahrzeuges anzutreffen ist, statthalten können, weil die Filterkerzen bzw. Filterzylinder einzeln in axialer und radialer Richtung elastisch gelagert und abgedichtet sind. Auch wenn das keramische Material der Filterkerzen bzw. Filterzylinder von Hause aus relativ spröde ist, haben Schwingungen und Stöße, wie sie bei Kraftfahrzeugen auf deren Bauteile ausgeübt werden, keine nachteilige Wirkung, da die axial und radial elastischen Lagerungen in der Lage sind, diese Schwingungen und Stöße abzufangen. Es ist daher erfindungsgemäß möglich, eine Technologie mit poröskeramischen Filterkerzen bzw. Filterzylindern für Kraftfahrzeug-Bauteile einzusetzen. Es ist eine Lagerung gewählt, die auch im Lang-zeitbetrieb und unter verschiedensten Betriebsbe-dingungen auch bei extrem hohen Betriebstemperaturen ihre elastischen Eigenschaftn beibehält.

Bei einem solchen Rußfilter ist eine hohe Fähigkeit zum Ansammeln von Rußpartikeln vorhanden, mit der Folge, daß die Filterzone nur in relativ großen Zeitabständen regeneriert werden muß.

Vorzugsweise wird vorgeschlagen, daß die die Filterkerze oder Filterzylinder axial lagernde und abdichtende Scheibe eine Blähmatte aus Keramikfasern ist. Diese Maßnahme hat den Vorteil, daß durch die Verwendung einer Blähmatte für die axiale Lagerung zweierlei erreicht wird:

Zum einen hat die Blähmatte die Eigenschaft, über einen extrem großen Temperaturbereich eine elastische Lagerung zu ermöglichen, während zum anderen die Blähmatte die Eigenschaft hat, bei Temperaturerhöhung aufzuquellen, so daß die Filterkerzen axial verspannt werden, um unterschiedliche Ausdehnungen von Keramik und Metall auszugleichen.

Bei weiteren Ausführungsformen der Erfindung sind die Filterkerzen bzw. Filterzylinder an ihren Enden in Zentriertöpfen zentriert gehalten. Diese Maßnahme hat den Vorteil, daß auch bei einem aus einer Vielzahl von Filterkerzen bzw. Filterzylindern bestehenden Filter alle Filterkerzen bzw. Filterzylinder parallel zueinander ausgerichtet werden können und zum anderen eine Druckkammer für die Blähmatte entsteht.

Bei weiteren Ausführungsformen der Erfindung sind die Filterkerzen oder Filterzylinder auf der Einlaßseite axial mittels eines gitterartigen Stützrahmens gehalten.

Diese Maßnahme hat den Vorteil, daß die Filterkerzen oder -zylinder nahezu in der gesamten Radialebene ohne merklichen Strömungswiderstand von den Abgasen angeströmt werden können.

Bei weiteren Ausführungsbeispielen der Erfindung sind die Filterkerzen oder -zylinder auf der Auslaßseite axial mit einer Dichtplatte gehalten, die mit den Innenräumen der Filterkerzen kommuniz-ie-rende Öffnungen aufweist.

Diese Maßnahme hat den Vorteil, daß zum einen ein hohes Ausmaß an Dichtigkeit auf der Auslaßseite erreicht werden kann, so daß keine Leckströme von Abgas um die Filterkerzen oder -zylinder herum möglich sind. Ferner hat die Dichtplatte den Vorteil, daß sie zugleich eine Halterung und Zentrierung der Filterkerzen bzw. -zylinder ermöglicht, und durch die mit den Innenräumen kommunizierenden Öffnungen ist gewährleistet, daß das gesamte Abgas ohne Strömungswiderstand durch die Dichtplatte abströmen kann.

Bei den letztgenannten beiden Varianten der Erfindung ist es möglich, daß die Filterkerzen bzw. -zylinder mit dem Stützrahmen und der Dichtplatte einen Filterblock bilden, der in ein Gehäuse des Rußfilters einsetzbar und vorgespannt ist.

Diese Maßnahme hat den ganz wesentlichen Vorteil, daß eine Vormontage des Filterblocks möglich ist, die es gestattet, den komplett vormontierten Filterblock in das Gehäuse einzusetzen, ohne daß noch Montagearbeiten im Gehäuse erforderlich sind.

Besonders bevorzugt ist dabei, wenn der Filterblock im Gehäuse mit der Dichtplatte radial und axial fest und mit dem Stützrahmen radial und axial lose gehalten ist.

Diese Maßnahme hat den Vorteil, daß zum einen eine hohe Dichtigkeit des Rußfilters auf der Auslaßseite gegeben ist, die wiederum Leckströme um die Filterkerzen bzw. -zylinder herum verhindert, während andererseits die lose Lagerung des Filterblocks an der Einlaßseite zum einen gewährleistet, daß sich der Filterblock relativ zum Gehäuse in radialer und axialer Richtung ausdehnen kann, andererseits aber Erschütterungen und Schwingungen vom Gehäuse auf den Filterblock gedämpft werden können, wenn die radiale und axial lose Halterung auf der Einlaßseite durch eine elastische Ringdichtung oder dergleichen dargestellt wird.

Bei den vorstehend genannten Ausführungsbeispielen ist ferner besonders bevorzugt, wenn im Filterblock die Dichtplatte und der Stützrahmen axial gegeneinander verspannt sind.

Diese Maßnahme hat den Vorteil, daß bereits während der Vormontage des Filterblocks durch einfache Maßnahmen ein axiales Verspannen sämtlicher Filterkerzen bzw. -zylinder möglich ist.

Bei einem anderen Ausführungsbeispiel der Erfindung sind hingegen die Filterkerzen bzw. -zylinder einzeln von der Einlaßseite her gegen die Dichtplatte axial verspannt.

Diese Maßnahme hat den Vorteil, daß jede einzelne Filterkerze oder -zylinder separat vorgespannt werden kann, um unterschiedliche Längentoleranzen der Keramikkörper der Kerzen oder Zylinder auszugleichen.

Weitere Vorteile ergeben sich aus der Beschreibung un der beigefügten Zeichnung.

Ausführungsbeispiele der Erfindung sind in der Zeichnung dargestellt und werden in der nachfolgenden Beschreibung näher erläutert. Es zeigen:

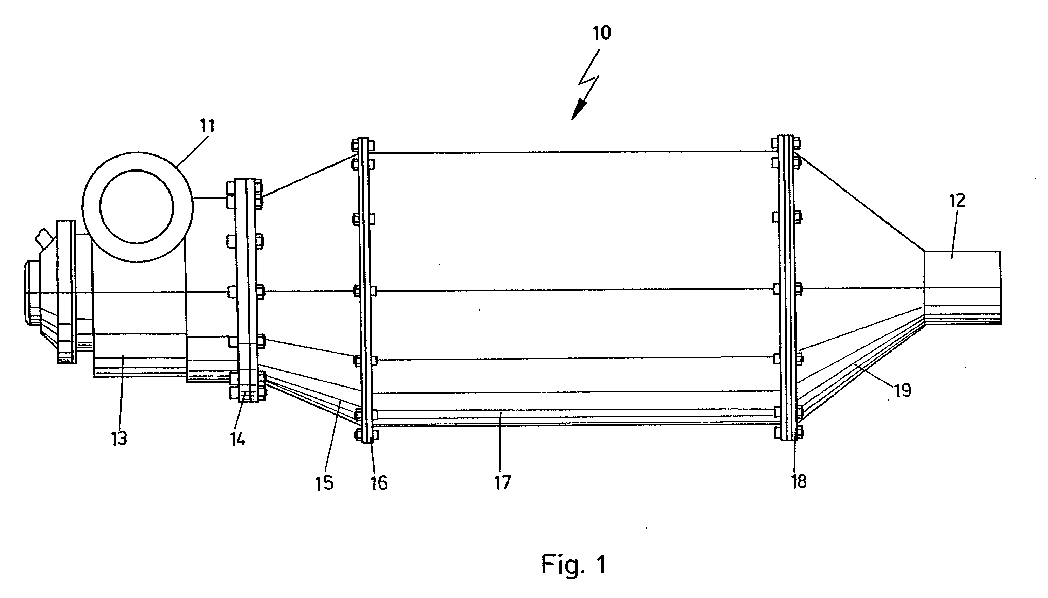

Figur 1     eine Seitenansicht, von außen, eines kompletten Rußfilters entsprechend der vorliegenden Erfindung;

Figur 2     eine Darstellung, ähnlich Figur 1, jedoch um 90° um die Längsachse gedreht und teilweise aufgebrochen;

Figur 3     einen Radialschnitt durch den Rußfilter der Figur 1 und 2 in der Ebene III-III;

Figur 4     eine Darstellung wie Figur 3, jedoch für die Radialebene IV-IV von Figur 2;

Figur 5     in vergrößertem Maßstab das mit V in Figur 2 bezeichnete Detail;

Figur 6     eine Variante zur Darstellung der Figur 5, wie in Figur 2 mit VI bezeichnet;

Figur 7     ebenfalls in vergrößertem Maßstab das mit VII in Figur 3 bezeichnete Detail;

Figur 8     in vergrößertem Maßstab das mit VIII in Figur 2 bezeichnete Detail;

Figur 9     eine Variante zu den Darstellungen der Figuren 5 und 6 für ein weiteres Ausführungsbeispiel der Erfindung.

In den Figuren bezeichnet 10 insgesamt ein Rußfilter, wie es für Kraftfahrzeuge mit Dieselmotor verwendet werden soll. Das Rußfilter 10 umfaßt ein Gehäuse mit einem Einlaß 11 und einem Auslaß 12 für das Abgas. Dem Einlaß 11 ist eine Brennkammer 13 nachgeschaltet, mit der von Zeit zu Zeit der Rußfilter 10 durch Abbrennen seiner Filterzone regeneriert werden kann. Derartige Brennkammern 13 sind an sich bekannt und sollen daher im Rahmen der vorliegenden Anmeldung nicht nochmals erläutert werden.

Die Brennkammer 13 läuft in axialer Richtung in einen ersten Flansch 14 aus, von dem ein Eintrittskonus 15 mit sich vergrößerndem Querschnitt abgeht. Der Eintrittskonus 15 ist an seinem Ausgang mit einem zweiten Flansch 16 versehen. An den zweiten Flansch 16 ist ein zylindrischer Abschnitt 17, nämlich die Filterzone des Rußfilters 10, angeschlossen. Ausgangsseitig geht der zylindrische Abschnitt 17 in einen dritten Flansch 18 über, von dem ein Austrittskonus 19 mit sich verjüngendem Querschnitt zum Auslaß 12 führt. Die Flanschverbindungen können alternativ durch Schweißnähte ersetzt werden.

In den Figuren ist die Strömungsrichtung des Abgases mit 20 bezeichnet.

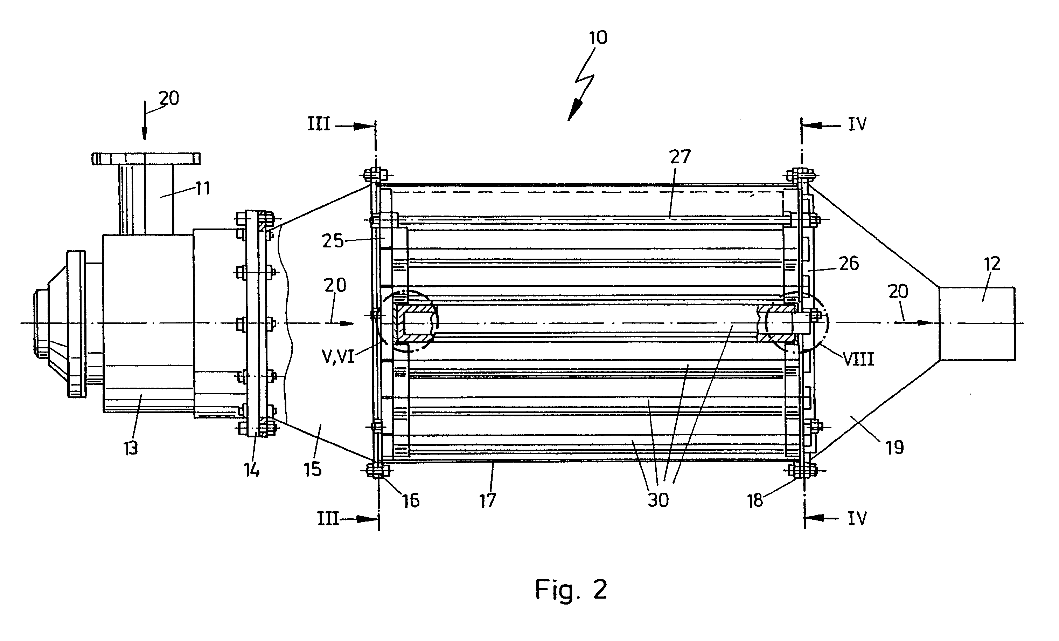

Wie man aus den Figuren 2 bis 4 deutlich erkennen kann, wird der zylindrische Abschnitt 17 axial an der Eintrittseite des zweiten Flansches 16 von einem Stützrahmen 25 und ausgangsseitig am dritten Flansch 18 von einer Dichtplatte 26 begrenzt. Der Stützrahmen 25 und die Dichtplatte 26 können bei Ausführungsbeispielen der Erfindung mittels Zugankern 27 axial verspannt sein. Es ist jedoch auch möglich, statt Zugankern 27 andere Verspannmittel vorzusehen, wie dies an sich bekannt ist.

Ein vom Stützrahmen 25 und der Dichtplatte 26 gebildeter Filterblock, der in noch zu beschreibender Weise je nach Leistung des zugehörigen Dieselmotors mit Filterelementen bestückt wird, kann auf diese Weise vormontiert und vorgespannt werden, so daß der Filterblock auch im kalten Zustand des Rußfilters 10 dicht ist und axiale sowie radiale Kräfte und Schwingungen aufgenommen werden können.

Die Filterlemente werden beim erfindungsgemäßen Rußfilter 10 durch keramische Filterkerzen 30 oder Filterzylinder gebildet, die in großer Anzahl zwischen dem Stützrahmen 25 und der Dichtplatte 26 in axialer Richtung angeordnet sind. Im folgenden wird nur noch von Filterkerzen gesprochen, obwohl es auch Filterzylinder sein können.

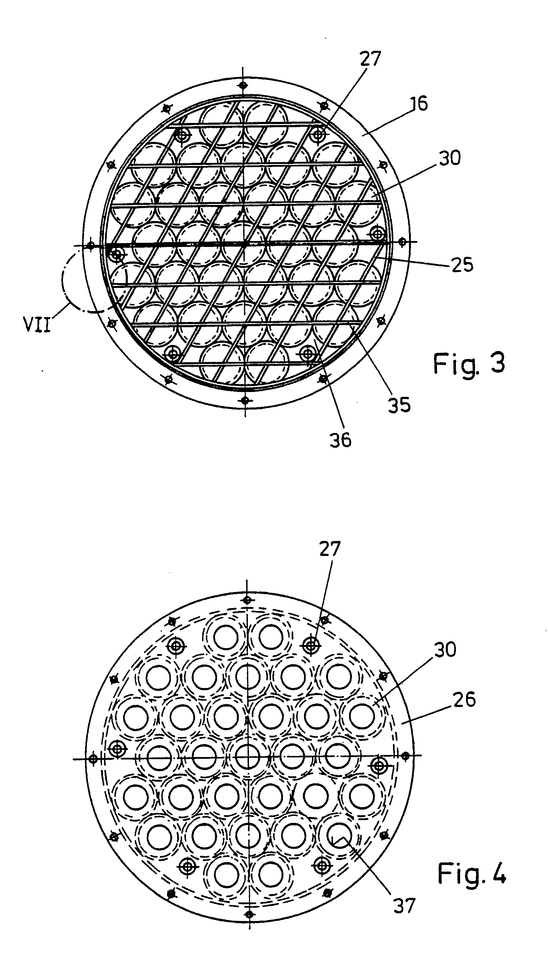

Um ein axiales Anströmen der Filterkerzen 30 von der Eintrittsseite her zu ermöglichen, ist dort der Stützrahmen 25 gitterartig mit Stegen 35 ausgebildet, auf denen sich die Filterkerzen 30 axial abstützen können. Hierzu ist das Gitterraster der Stege 35 so ausgebildet, daß alle Filterkerzen 30 sicher axial abgestützt werden, wie aus Figur 3 deutlich wird. Durch die von den Stegen 35 gebildeten Zwischenräume 36 kann das Abgas 20 in axialer Richtung durch den Stützrahmen 25 hindurch einströmen.

Die Filterkerzen 30 werden andererseits auf der Austrittseite des Rußfilters 10 von der Dichtplatte 26 gehalten, die, wie Figur 4 deutlich zeigt, in der Radialebene durchgeht, mit Ausnahme von Öffnungen 37, die mit Innenräumen der Filterkerzen 30 fluchten.

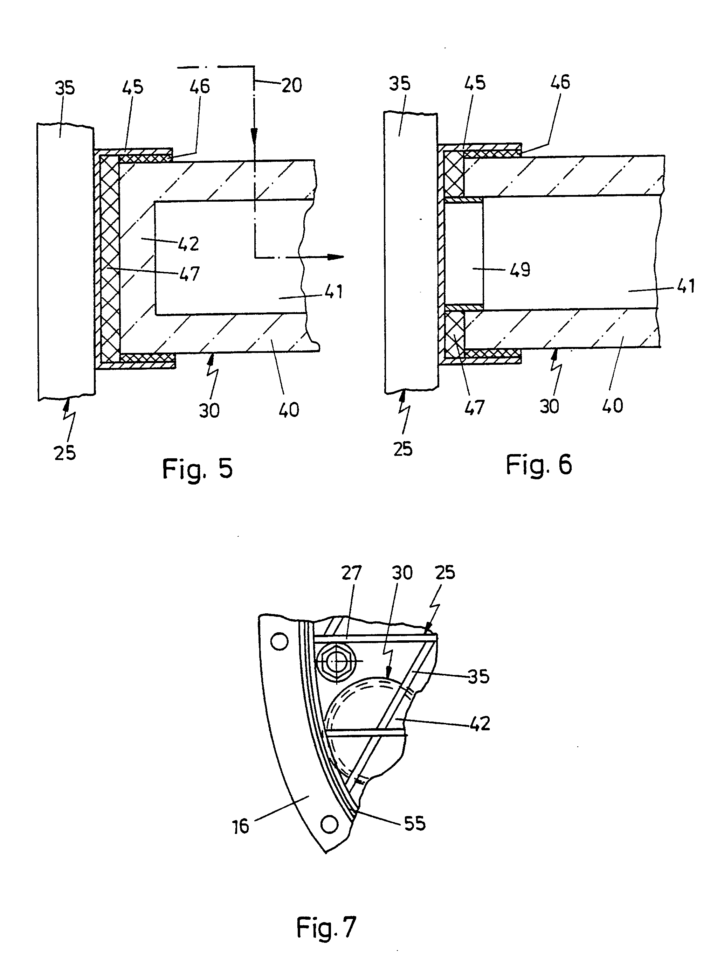

Die Einzelheiten der Befestigung der Filterkerzen 30 und der sich einstellende Strömungsverlauf für das Abgas 20 sollen nun anhand der Figuren 5 bis 9 erläutert werden:

In Figur 5 ist zu erkennen, daß die Filterkerzen 30 als Hohlzylinder aus poröskeramischen Material ausgebildet sind und demzufolge zylindrische Wände 40 aufweisen. Das Abgas 20, das durch den Stützrahmen 25 durchgeströmt ist, wird aus der axialen in eine radiale Richtung umgelenkt und strömt in radialer Richtung durch die zylindrischen Wände 40 in Innenräume 41 der Filterkerzen 30, um dort wieder in eine axiale Richtung umgelenkt zu werden und schließlich aus den Öffnungen 37 der Dichtplatte 26 auszutreten.

Bei dem in Figur 5 dargestellten Ausführungsbeispiel der Erfindung werden die Filterkerzen 30 am eintrittsseitigen Ende mittels metallischer Zentriertöpfe 45 an den Stegen 35 des Stützrahmens 25 gehalten. Hierzu sind die metallischen Zentriertöpfe 45 am Stützrahmen 25 befestigt.

Der lichte Querschnitt der metallischen Zentriertöpfe 45 ist größer als der Querschnitt der Filterkerzen 30. Der sich hierdurch bildenden Zwischenraum ist durch eine elastische Radiallagerung 46 bzw. Dichtung, nämlich einer Hülse aus einem gepresstem Metallgestrick, ausgefüllt. Statt eines Metallgetricks kann auch ein Metallgewirke, Metallgewebe oder Metallgeflecht verwendet werden, soweit die Dichtigkeit und das Aufnahmevermögen von Schwingungen und Erschütterungen ausreichen. Um bei Metallgeweben und Metallgeflechten eine ausreichende Dicke des Materials zu erreichen, kann es mehrlagig angeordnet und/oder in Faltungen gelegt sein.

Die Böden 42 der Filterkerzen 30 sind ferner im axialen Abstand von den metallischen Zentriertöpfen 45 angeordnet, um Raum für eine elastische Axiallagerung 47 zu schaffen. Die elastische Axiallagerung 47 wird durch eine Blähmatte gebildet. Hierunter versteht man eine keramische Matte, die vorzugsweise aus einer Aluminium-Silikat-Keramikfaser besteht und zusätzlich mit einem Vermiculit-Material versehen ist, das intumeszierend wirkt und sich damit bei zunehmender Temperatur ausdehnt. Blähmatten dieser Art werden beispielsweise unter dem eingetragenen Warenzeichen INTERAM von der Firma 3M Deutschland GmbH vertrieben.

Die in Figur 5 dargestellte Anordnung gestattet damit eine elastische Lagerung sowohl in axialer wie auch in radialer Richtung. Das verhältnismäßig spröde keramische Material der Filterkerzen 30 würde daher auch dann nicht beschädigt, wenn größere Schwingungen oder Stöße auf das Kraftfahrzeug ausgeübt bzw. von diesem erzeugt werden. Die Verwendung der Blähmatte für die elastische Axiallagerung 47 bewirkt dabei, daß die Filterkerzen 30 axial verspannt werden, wenn der Rußfilter 10 seine Betriebstemperatur erreicht.

Bei der in Figur 6 dargestellten Variante ist die Filterkerze 30 ohne einen keramischen Boden ausgebildet. Zur Halterung und Zentrierung der Filterkerze 30 dient in diesem Falle ein kurzes Rohrstück 49, das in radialer Richtung durch eine entsprechende Ausnehmung in der elastischen Axiallagerung 47 zentriert wird.

Bei der in Figur 6 verwendeten Filterkerze 30 ist die Montage vereinfacht, weil die Filterkerze 30 an beiden axialen Enden gleich ausgebildet ist und daher nicht vor der Montage orientiert werden muß.

In Figur 7 ist zu erkennen, daß der Stützrahmen 25 mit radialem Spiel vom zweiten Flansch 16 umgeben ist, so daß der Stützrahmen 25 sich in axialer und radialer Richtung gegenüber dem zweiten Flansch 16 bewegen kann. Um hier eine elastische radiale Lagerung zu erreichen, ist der Zwischenraum mit einer umlaufenden elastischen Dichtung 55, ebenfalls aus einem Metallgestrick, ausgefüllt.

Die elastische Dichtung 55 in Figur 7 und die elastischen Radiallagerungen 46 der Figuren 5 und 6, nämlich das jeweils verwendete Metallgestrick, werden vorzugsweise mit einem keramischen Kleber auf die Filterkerze aufgeklebt.

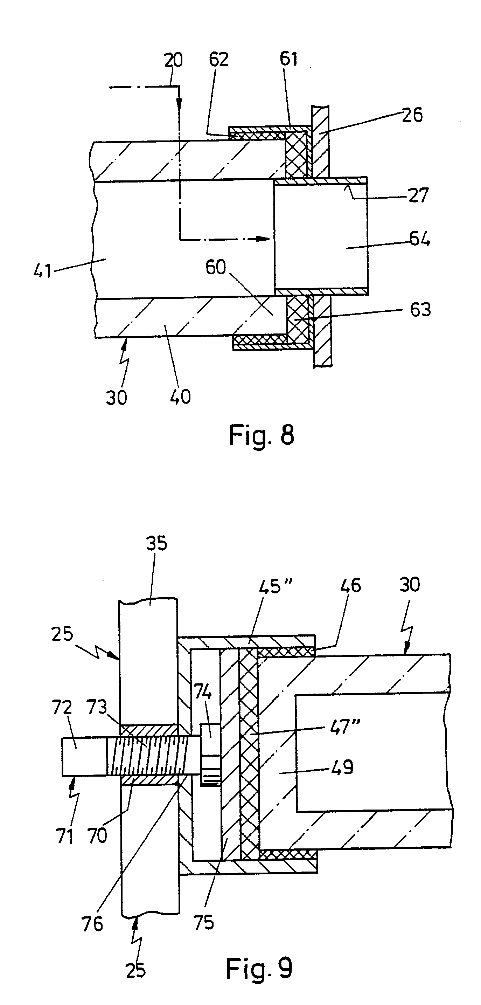

Figur 8 zeigt die entsprechenden Verhältnisse an der Austrittsseite des Filterblocks.

Man erkennt, daß die Filterkerzen 30 mit ihrem offenen Ende 60 in einem metallischen Zentriertopf 61 gehalten werden, der mit der Dichtplatte 26 verbunden ist. Die offenen Enden 60 werden im Zentriertopf 61 wiederum mittels einer elastischen Radiallagerung 62 aus einem gepreßten Metallgestrick sowie einer elastischen Axiallagerung 63 in Gestalt eines Formstücks einer Blähmatte gehalten. Zum Zentrieren der Anordnung und zum Ausbilden der Öffnungen 37 dienen Rohrstücke 64.

Auch in Figur 8 ist mit 20 der Abgasstrom eingezeichnet, und man kann aus den Figuren 5 und 8 entnehmen, daß Abgas 20 über die gesamte axiale Länge der Filterkerzen 30 in radialer Richtung durch die Wände 40 eintritt, im Innenraum 41 gesammelt wird und dann durch die Öffnungen 37 der Dichtplatte 26 abströmt.

Die Dichtplatte 26 ist fest am dritten Flansch 18 angeordnet, so daß der zwischen dem Stützrahmen 25 und der Dichtplatte 26 angeordnete Filterblock am dritten Flansch 18 in einem Festlager und am zweiten Flansch 16 wie anhand der Figur 7, beschrieben, in einem Loslager gehalten wird.

Während bei den bislang geschilderten Ausführungsbeispielen eine Anordnung vorgezogen wurde, bei der die zwischen dem Stützrahmen 25 und der Dichtplatte 26 angeordneten Filterkerzen 30 gesamthaft verspannt wurden, beispielsweise mittels der bereits erwähnten Zuganker 27, zeigt Figur 9 eine Anordnung, bei der eine individuelle axiale Vorspannung jeder einzelnen Filterkerze 30 möglich ist. Dies kann zweckmäßig sein, wenn die Keramikkörper der Filterkerzen 30 produktionsbedingt eine unterschiedliche Länge aufweisen, die es für jede einzelne Filterkerze 30 zu kompensieren gilt.

Beim Ausführungsbeispiel der Figur 9 sind Gewindeeinsätze 70 im Stützrahmen 25 vorgesehen. In den Gewindeeinsätzen 70 sind Gewindebolzen 71 angeordnet. Die Gewindebolzen 71 sind an ihrem nach links über den Stützrahmen 25 vorstehenden Ende mit einem Mehrkant 72 versehen, damit die Gewindebolzen 71 mittels eines Schraubenschlüssels oder dergleichen angezogen werden können. Es versteht sich, daß statt des Mehrkants 72 an dieser Stelle auch ein Schlitz für einen Schraubenzieher oder ein Kreuzschlitz oder ein Inbus-Kopf angeordnet sein können.

Ein Gewindeabschnitt 73 des Gewindebolzens 71 läuft im Gewindeeinsatz 70. An dem vom Mehrkant 72 abgewandten Ende läuft der Gewindebolzen 71 in einem Kopf 74 aus, der gegen eine Druckplatte 75 stößt. Der Gewindebolzen 71 ist dabei in einer Durchgangsöffnung 75 gehalten. Im übrigen entspricht die Anordnung derjenigen der Figur 5.

Wie man leicht erkennen kann, ist es durch Verdrehen des Gewindebolzens 71 möglich, über die Druckplatte 75 der Filterkerze 30 eine axiale Vorspannung mitzuteilen, wenn die Druckplatte 75 über die elastische Axiallagerung 47 auf den Boden 49 der Filterkerze 30 drückt.

Auf diese Weise kann bei der Vormontage des Filterblocks durch Anziehen jedes einzelnen Gewindebolzens 71 jede einzelne Filterkerze 30 in gewünschter Weise vorgespannt und damit Längentoleranzen ausgeglichen werden.

Es versteht sich, daß über die vorstehend erläuterten Ausführungsbeispiele hinaus noch weitere Abwandlungen möglich sind, ohne den Rahmen der vorliegende Erfindung zu verlassen. So ist es beispielsweise möglich, den im zylindrischen Abschnitt 17 des Rußfilters 10 angeordneten Filterblock in axial entgegengesetzter Richtung einzubauen, indem der Stützrahmen 25 auf der Austrittsseite un die Dichtplatte 26 an der Eintrittsseite angeordnet wird. Auch die beschriebenen Lagerungs- und Zentriermittel können jeweils miteinander vertauscht werden, ohne daß dies den Rahmen der vorliegenden Erfindung verläßt.

## Patentansprüche

1. Rußfilter für Dieselmotoren mit einem Einlaß (11) zum Einleiten von Abgasen (20), einem Auslaß (12) und einer zwischen Einlaß (11) und Auslaß (12) gelegenen Filterzone, die eine Vielzahl von rohrförmigen poröskeramischen Filterkerzen (30) oder Filterzylindern aufweist, durch deren zylindrische Wandungen (40) das Abgas (10) radial eintritt und durch deren axialen Innenraum (41) das Abgas (20) axial wieder austritt, **dadurch gekennzeichnet,** daß die Filterkerzen (30) oder Filterzylinder an ihren Enden mittels einer Hülse aus Metallgestrick, -gewirk, -geflecht oder -gewebe (46) radial und mittels einer Scheibe axial elastisch gelagert und abgedichtet sind.

2. Rußfilter nach Anspruch 1, **dadurch gekennzeichnet,** daß die die Filterkerze oder Filterzylinder axial lagernde und abdichtende Scheibe eine Blähmatte aus Keramikfasern ist.

3. Rußfilter nach Anspruch 1, **dadurch gekennzeichnet,** daß die die Filterkerze oder Filterzylinder axial lagernde und abdichtende Scheibe eine Matte aus Metallgestrick, -gewirk, -geflecht oder -gewebe ist.

4. Rußfilter nach einem der vorherigen Ansprüche, **dadurch gekennzeichnet,** daß die Filterkerzen (30) oder Filterzylinder an ihren Enden in Zentriertöpfen (45, 61) zentriert gehalten sind.

5. Rußfilter nach einem der vorherige Ansprüche, **dadurch gekennzeichnet,** daß die Filterkerzen (30) oder Filterzylinder vorzugsweise auf der Einlaßseite, axial mittels eines gitterartigen Stützrahmens (25) gehalten sind.

6. Rußfilter nach einem der vorherigen Ansprüche, **dadurch gekennzeichnet,** daß die Filterkerzen (30) oder Filterzylinder vorzugsweise auf der Auslaßseite, axial mittels einer Dichtplatte (26) gehalten sind, die mit den Innenräumen (41) der Filterkerzen (30) oder Filterzylinder kommunizierende Öffnungen (37) aufweist.

7. Rußfilter nach Anspruch 5 oder 6, **dadurch gekennzeichnet,** daß die Filterkerzen (30) oder Filterzylinder mit dem Stützrahmen (25) und der Dichtplatte (26) einen Filterblock bilden, der in ein Gehäuse (17) des Rußfilters (10) einsetzbar ist.

8. Rußfilter nach Anspruch 7, **dadurch gekennzeichnet,** daß der Filterblock im Gehäuse (17) mit der Dichtplatte (26) radial und axial lose, vorzugsweise über eine elastische Ringdichtung (55), gehalten ist.

9. Rußfilter nach Anspruch 7 oder 8, **dadurch gekennzeichnet,** daß im Filterblock die Dichtplatte (26) und der Stützrahmen (25) axial gegeneinander verspannt (27) sind.

10. Rußfilter nach einem der vorherigen Ansprüche, **dadurch gekennzeichnet,** daß die Filterkerzen (30) oder Filterzylinder einzeln von der Einlaßseite her gegen die Dichtplatte (26) verspannt sind.

11. Rußfilter nach einem der vorherigen Ansprüche, **dadurch gekennzeichnet,** daß die Filterkerzen (30) oder Filterzylinder an der Oberfläche glatt oder gewellt ausgebildet sind.

**Geänderte Patentansprüche gemäss Regel 86-(2) EPÜ**

1. Rußfilter für Dieselmotoren mit einem Einlaß (11) zum Einleiten von Abgasen (20), einem Auslaß (12) und einer zwischen Einlaß (11) und Auslaß (12) gelegenen Filterzone, die eine Vielzahl von rohrförmigen poröskeramischen Filterkerzen (30) oder Filterzylindern aufweist, durch deren zylindrische Wandungen (40) das Abgas (10) radial eintritt und durch deren axialen Innenraum (41) das Abgas (20) axial wieder austritt, **dadurch gekennzeichnet,** daß die Filterkerzen (30) oder Filterzylinder an ihren beiden Enden mittels einer Hülse aus Metallgestrick, -gewirk, -geflecht oder -gewebe (46) radial und mittels einer Scheibe axial elastisch gelagert und abgedichtet sind.

2. Rußfilter nach Anspruch 1, **dadurch gekennzeichnet,** daß die die Filterkerze oder Filterzylinder axial lagernde und abdichtende Scheibe eine Blähmatte aus Keramikfasern ist.

3. Rußfilter nach Anspruch 1, **dadurch gekennzeichnet,** daß die die Filterkerze oder Filterzylinder axial lagernde und abdichtende Scheibe eine Matte aus Metallgestrick, -gewirk, -geflecht oder -gewebe ist.

4. Rußfilter nach einem der vorherigen Ansprüche, **dadurch gekennzeichnet,** daß die Filterkerzen (30) oder Filterzylinder an ihren Enden in Zentriertöpfen (45, 61) zentriert gehalten sind.

5. Rußfilter nach einem der vorherige Ansprüche, **dadurch gekennzeichnet,** daß die Filterkerzen (30) oder Filterzylinder vorzugsweise auf der Einlaßseite, axial mittels eines gitterartigen Stützrahmens (25) gehalten sind.

6. Rußfilter nach einem der vorherigen Ansprüche, **dadurch gekennzeichnet,** daß die Filterkerzen (30) oder Filterzylinder vorzugsweise auf der Auslaßseite, axial mittels einer Dichtplatte (26) gehalten sind, die mit den Innenräumen (41) der Filterkerzen (30) oder Filterzylinder kommunizierende Öffnungen (37) aufweist.

7. Rußfilter nach Anspruch 5 oder 6, **dadurch gekennzeichnet,** daß die Filterkerzen (30) oder Filterzylinder mit dem Stützrahmen (25) und der Dichtplatte (26) einen Filterblock bilden, der in ein Gehäuse (17) des Rußfilters (10) einsetzbar ist.

8. Rußfilter nach Anspruch 7, **dadurch gekennzeichnet,** daß der Filterblock im Gehäuse (17) mit der Dichtplatte (26) radial und axial lose, vorzugsweise über eine elastische Ringdichtung (55), gehalten ist.

9. Rußfilter nach Anspruch 7 oder 8, **dadurch gekennzeichnet,** daß im Filterblock die Dichtplatte (26) und der Stützrahmen (25) axial gegeneinander verspannt (27) sind.

10. Rußfilter nach einem der vorherigen Ansprüche, **dadurch gekennzeichnet,** daß die Filterkerzen (30) oder Filterzylinder einzeln von der Einlaßseite her gegen die Dichtplatte (26) verspannt sind.

11. Rußfilter nach einem der vorherigen Ansprüche, **dadurch gekennzeichnet,** daß die Filterkerzen (30) oder Filterzylinder an der Oberfläche glatt oder gewellt ausgebildet sind.

Fig. 1

Fig. 2

EP 0 446 422 A1

Fig. 3

Fig. 4

Fig. 5

Fig. 6

Fig. 7

Fig. 8

Fig. 9

| | Europäisches Patentamt | EUROPÄISCHER RECHERCHENBERICHT | Nummer der Anmeldung |
|---|---|---|---|
| | | | EP 90 12 1073 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 257 793 (INDUSTRIAL FILTER & PUMP MFG.) <br> * Ansprüche 1,3; Spalte 3, Zeilen 1-13; Figuren 1,3 * | 1,4 | B 01 D 46/24 <br> F 01 N 3/02 |
| A | | 6,7 | |
| | - - - | | |
| Y | DE-A-3 234 321 (DIDIER-WERKE AG) <br> * Ansprüche 1,3,4,7; Seite 6, Abschnitt 3; Seite 7, Abschnitte 3,4; Figur 1 * | 1,4 | |
| | - - - | | |
| A | US-A-4 298 474 (D.A. SILLERS, Jr.) <br> * Ansprüche 1-4; Spalte 3, Zeilen 55-68; Spalte 4, Zeilen 1-68; Spalte 5, Zeilen 1-6; Figuren 1,4 * | 1,4-7 | |
| | - - - | | |
| A | WO-A-8 301 012 (PALL CORP.) <br> * Anspruch 1; Seite 5, Zeilen 1-14; Seite 17, Zeilen 21-35; Figuren 1,8a * | 1,6-9 | |
| | - - - - - | | |

|  | RECHERCHIERTE SACHGEBIETE (Int. Cl.5) |
|---|---|
|  | B 01 D <br> F 01 N |

Der vorliegende Recherchenbericht wurde für alle Patentansprüche erstellt

| Recherchenort | Abschlußdatum der Recherche | Prüfer |
|---|---|---|
| Den Haag | 07 Januar 91 | CUBAS ALCARAZ J.L. |